# FASCICULE DE BREVET EUROPEEN

(11) **EP 2 854 611 B1**
(45) Date de publication et mention de la délivrance du brevet: **09.11.2016**
(21) Numéro de dépôt: 13733341.5
(22) Date de dépôt: 05.06.2013
(51) Int. Cl.: A47J 37/06, A47J 37/07

(54) **ENSEMBLE DE CUISSON D'EXTÉRIEUR MULTIFONCTION**
MULTIFUNKTIONELLES KOCHGERÄT FÜR DEN AUSSENBEREICH
MULTI-FUNCTIONAL OUTDOOR COOKING ASSEMBLY

(30) Priorité: 05.06.2012 FR 1255199
(43) Date de publication de la demande: 08.04.2015
(73) Titulaire: L'Art du Jardin, 68700 Cernay (FR)
(72) Inventeur: KOHLER, Christian, F-68700 Cernay (FR); KOHLER, Kévin, F-68700 Cernay (FR)
(74) Mandataire: Merckling, Norbert
(86) Numéro de dépôt international: PCT/FR2013/051273
(87) Numéro de publication internationale: WO 2013/182808

(56) Documents cités:
- AT-A4- 510 145
- AU-A1- 2009 202 581
- CH-A- 461 053
- CH-A5- 692 569
- FR-A1- 2 519 538
- FR-A1- 2 635 258
- US-A1- 2006 191 528

## Description

La présente invention concerne un ensemble de cuisson d'extérieur multifonction intégrant un barbecue et un four par exemple de type four à pizza, à pain ou à tarte flambée. Le barbecue et le four sont combinés en un seul appareil et sont chauffés par un seul et même foyer, le four étant monté pivotant sur le dessus du barbecue de sorte qu'il peut être basculé en arrière pour dégager l'espace permettant d'utiliser le barbecue.

De nos jours, dans le domaine des appareils de cuisson d'extérieur, il existe de nombreux types de barbecues et de fours de type four à pizza, à pain ou à tarte flambée. Il n'existe cependant pas d'appareil de cuisson d'extérieur combinant à la fois un barbecue et un four au sein d'un même ensemble mobile et qui permette d'utiliser soit le barbecue, soit le four de manière satisfaisante, ces deux parties pouvant être utilisées indépendamment l'une de l'autre tout en étant chauffées par un seul et même foyer.

De même, pour les barbecues et les fours de type four à pizza, à pain ou à tarte flambée, il n'existe actuellement pas de dispositif de maintien en température des aliments cuits qui permette de maintenir chauds les aliments cuits tout en contrôlant leur température pour éviter qu'ils ne continuent à cuir ou ne se dessèchent. Avantageusement, un tel dispositif devrait pouvoir être adapté à n'importe quel ensemble de cuisson d'extérieur multifonction intégrant un barbecue et/ou un four.

Le problème auquel l'invention se propose d'apporter une solution consiste donc à fournir un nouveau type d'ensemble de cuisson d'extérieur multifonction intégrant à la fois un barbecue et un four tous deux chauffés par un seul et même foyer et à fournir également un dispositif de maintien en température des aliments cuits qui puisse être adapté à n'importe quel ensemble de cuisson d'extérieur intégrant un barbecue et/ou un four.

Afin de répondre à ces différents problèmes techniques, il existe déjà des appareils de cuisson d'extérieur intégrant à la fois un barbecue et un four, mais de par leur conception, ces appareils ne sont pas satisfaisants.

En effet, certains de ces appareils nécessitent un foyer pour chacune de leurs parties, ce qui forme une simple juxtaposition volumineuse et difficilement déplaçable se composant d'un barbecue et d'un four.

D'autres de ces appareils ne permettent pas d'utiliser le four ou le barbecue dans des conditions de sécurité satisfaisantes lorsque l'autre partie a déjà été utilisée et est encore chaude. Parmi ces appareils on peut citer ceux dont une partie, par exemple le four ou le barbecue, doit être dissociée puis déplacée avant de pouvoir utiliser l'autre partie. C'est le cas du dispositif divulgué dans le document US-A1-2006/019 15 28.

Il existe également des couvercles montés pivotant au dessus du barbecue, permettant de transformer celui-ci en un espace clos chauffé. L'enceinte chauffée obtenue n'est cependant pas un véritable four, notamment un four à pizza, à pain ou à tarte flambée car elle ne présente pas de fond en pierre réfractaire sur lequel la nourriture peut être cuite, elle ne permet pas l'évacuation des fumées, et ne permet pas d'obtenir des conditions de cuisson satisfaisantes pour des pizzas, du pain ou des tartes flambées. L'enceinte chauffée obtenue est alors plus similaire à une rôtissoire qu'à un véritable four.

Pour les barbecues, il existe des grilles pouvant être placées en position surélevée éloignée du foyer et sur lesquels les aliments cuits sont posés pour être maintenus chauds avant d'être servis à table. Cependant, ces grilles ne présentent pas une solution satisfaisante car elles ne permettent pas de contrôler la température des aliments placés sur celles-ci et bien souvent, lorsque les aliments y restent trop longtemps ils finissent soit par se refroidir, soit par se dessécher.

Pour répondre aux problèmes techniques évoqués la solution de l'invention consiste à prévoir un ensemble de cuisson d'extérieur multifonction intégrant un barbecue classique et un four de type four à pizza, à pain ou à tarte flambée, dans lequel le barbecue et le four sont combinés en un seul appareil et sont chauffés par un seul et même foyer.

Les objets assignés à l'invention sont atteints à l'aide d'un ensemble de cuisson d'extérieur multifonction se composant d'un barbecue et d'un four, l'ensemble étant monté sur un châssis et comprenant :
- le barbecue comprenant une enceinte montée sur le châssis, une face supérieure de cette enceinte et une face avant de cette enceinte étant ouvertes, une porte étant montée sur la face avant pour pouvoir la fermer, l'enceinte du barbecue comprenant un cendrier dans sa partie inférieure, un foyer monté au-dessus du cendrier, une surface de cuisson réalisée au niveau de la face supérieure ouverte de ladite enceinte;
- le four comprenant une enceinte métallique dont le fond est garni de pierres réfractaires afin de servir de surface de cuisson et d'inertie thermique, et une cheminée montée sur la partie supérieure du four, l'enceinte métallique comprenant :
- une face avant fermée par une porte,
caractérisé en ce que le four est monté mobile sur le barbecue par l'intermédiaire d'un moyen de liaison permettant de modifier sa position par rapport au barbecue en déplaçant ledit four entre une position fonctionnelle de cuisson au-dessus du barbecue et une position libérant l'accès à la surface de cuisson du barbecue.
La surface de cuisson est par exemple composée d'une grille et/ou d'une plaque dite « plancha ».

Selon un exemple de réalisation de l'ensemble de cuisson d'extérieur multifonction conforme à l'invention, le four est monté mobile sur le barbecue grâce à une articulation de pivotement.

Selon un exemple de réalisation de l'ensemble de cuisson d'extérieur multifonction conforme à l'invention, le four est monté pivotant vers l'arrière grâce à l'articulation de pivotement, laquelle présente un axe de pivotement sensiblement horizontal.

Selon un exemple de réalisation de l'ensemble de cuisson d'extérieur multifonction conforme à l'invention, l'articulation de pivotement est fixée sur le bord supérieur arrière de l'enceinte du barbecue.

Selon un autre exemple de réalisation de l'ensemble de cuisson d'extérieur multifonction conforme à l'invention, le four est monté sur le barbecue par l'intermédiaire d'organes de liaison permettant de pivoter ledit four autour d'un axe de pivotement sensiblement vertical.

Selon un autre exemple de réalisation de l'ensemble de cuisson d'extérieur multifonction conforme à l'invention, le four est monté sur le barbecue par l'intermédiaire d'organes de coulissement permettant au four de coulisser de la position fonctionnelle de cuisson vers la position libérant la surface de cuisson et inversement.

Selon un exemple de réalisation de l'ensemble de cuisson d'extérieur multifonction conforme à l'invention, l'enceinte du four présente une double paroi, hormis au niveau de sa face avant et de son fond, la double paroi étant d'une part ouverte dans sa partie inférieure et d'autre part raccordée à la cheminée et en communication avec le foyer du barbecue.

Selon un exemple de réalisation de l'ensemble de cuisson d'extérieur multifonction conforme à l'invention, l'enceinte du barbecue présente des flancs latéraux, prolongés par des panneaux latéraux de support pour tourne broche.

Selon un exemple de réalisation de l'ensemble de cuisson d'extérieur multifonction conforme à l'invention, la cheminée est décentrée vers l'avant.

Selon un exemple de réalisation de l'ensemble de cuisson d'extérieur multifonction conforme à l'invention, le barbecue comporte une barre horizontale sur sa face arrière, les montants de cette barre horizontale étant horizontaux ou obliques et servant également de dispositif de butée pour le four en position basculée.

Selon un exemple de réalisation de l'ensemble de cuisson d'extérieur multifonction conforme à l'invention, les montants de ladite barre horizontale comportent des patins d'appui prévus pour servir d'appui pour la face arrière du four lorsque celui-ci est basculé en arrière.

Selon un exemple de réalisation de l'ensemble de cuisson d'extérieur multifonction conforme à l'invention le four peut être basculé en arrière par l'articulation de pivotement selon un angle d'inclinaison compris de préférence entre 50° et 70°. L'inclinaison des montants est bien entendu définie de manière correspondante.

Le châssis comprend par exemple quatre pieds verticaux fixés au foyer par leur extrémité supérieure. Les pieds arrière sont avantageusement inclinés vers l'arrière.

Selon un exemple de réalisation conforme à l'invention, l'ensemble de cuisson d'extérieur multifonction comporte au moins un caisson de maintien en température.

Selon un exemple de réalisation de l'ensemble de cuisson d'extérieur multifonction conforme à l'invention, le caisson de maintien en température comprend une enceinte métallique à monter ou à fixer par l'un de ses flancs sur un côté chaud du barbecue et une porte permettant l'accès à l'intérieur de l'enceinte métallique.

Selon un exemple de réalisation de l'ensemble de cuisson d'extérieur multifonction conforme à l'invention, le flanc de fixation du caisson est ouvert ou fermé, totalement ou partiellement.

Selon un exemple de réalisation de l'ensemble de cuisson d'extérieur multifonction conforme à l'invention, le flanc de fixation du caisson comporte des rebords horizontaux pourvus d'orifices pour sa fixation.

Selon un exemple de réalisation de l'ensemble de cuisson d'extérieur multifonction conforme à l'invention, les flancs verticaux du caisson situés de chaque côté de la porte comportent des supports horizontaux pour des plateaux horizontaux prévus pour y entreposer des pizzas, tartes flambées ou autres.

Selon un exemple de réalisation de l'ensemble de cuisson d'extérieur multifonction conforme à l'invention, les plateaux horizontaux sont placés de manière amovible sur les supports horizontaux.

Selon un exemple de réalisation de l'ensemble de cuisson d'extérieur multifonction conforme à l'invention, le caisson de maintien en température comporte un thermomètre qui affiche la température à l'intérieur de celui-ci et un échappement d'air prévu pour être actionné en ouverture par l'utilisateur afin de laisser échapper l'air chaud contenu dans le caisson.

Le four de l'invention est un véritable four par exemple à pizza, à pain ou à tarte flambée. Il comporte une enceinte métallique fermée présentant un fond garni de pierres réfractaires, cette enceinte étant fermée sur sa face avant par une porte basculante.

Pour son chauffage, le four présente des passages pour les fumées issues du foyer du barbecue en vue de les évacuer par la cheminée. Ces passages latéraux servent avantageusement de logement pour des panneaux latéraux de support pour tourne broche du barbecue lorsque le four est basculé au-dessus du barbecue, ce qui évite d'avoir à démonter ces panneaux latéraux de support lorsqu'on souhaite utiliser le four.

Par son montage, le four, selon un exemple de réalisation, peut être basculé en arrière, ce qui permet un accès aisé et total au barbecue situé en dessous.

Un autre avantage de l'ensemble de cuisson conforme à l'invention, réside dans le fait que même en position pivotée vers l'arrière, la double paroi permet de capter une part non négligeable des fumées de combustion et de cuisson issues du barbecue et de les évacuer par la cheminée.

Compact et transportable, réalisé en métal et prévu avec des roulettes, l'ensemble de cuisson de l'invention est peu onéreux et facilement déplaçable.

En position de rangement, à savoir lorsque la partie four est rabattue sur la partie barbecue, l'ensemble est fermé et protégé de la pluie et des salissures par la partie supérieure du four, ce qui permet de le laisser sur place, par exemple lorsqu'il est encore très chaud ou que l'utilisateur ne souhaite pas le ranger à l'abri des intempéries.

Pour maintenir au chaud les aliments cuits, l'ensemble de cuisson peut comporter un caisson à monter ou à fixer sur un côté chaud, par exemple contre le flanc du barbecue. L'air contenu dans celui-ci est alors chauffée par rayonnement, ce qui permet de garder au chaud les aliments placés à l'intérieur. Un thermomètre permet de vérifier si la température à l'intérieur du caisson n'est pas trop élevée et un échappement d'air peut être actionné pour laisser sortir l'air chaud si la température à l'intérieur du caisson est trop élevée. Des plateaux peuvent être placés dans le caisson pour y entreposer des pizzas, tartes flambées ou autre en vue de les maintenir en température.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de l'ensemble de cuisson d'extérieur multifonction de l'invention en position d'utilisation du four ;
- la figure 2 est une vue d'ensemble en perspective de l'ensemble de cuisson d'extérieur multifonction de l'invention en position d'utilisation du barbecue ;
- la figure 3 est une vue de face correspondant à la figure 1 ;
- la figure 4 est une vue de profil correspondant à la figure 1 ;
- la figure 5 est une vue de profil correspondant à la figure 2 ;
- les figures 6 et 7 sont des vues en coupe verticale de l'ensemble de cuisson d'extérieur multifonction de l'invention ;
- la figure 8 est une vue d'ensemble en perspective de l'ensemble de cuisson d'extérieur multifonction de l'invention pourvu d'un caisson de maintien en température des aliments cuits dont la porte de façade est ouverte ;
- la figure 9 est une vue d'ensemble en perspective de l'ensemble de cuisson d'extérieur multifonction de l'invention pourvu d'un caisson de maintien en température des aliments cuits dont la porte de façade est fermée ;
- les figures 10 à 13 sont des vues d'ensemble en perspective du caisson de maintien en température des aliments cuits de l'invention, la figure 13 étant une vue de l'arrière ;
- la figure 14 est une représentation schématique partielle et en coupe d'un autre exemple de réalisation de l'ensemble de cuisson conforme à l'invention ;
- et la figure 15 est une représentation schématique d'un autre exemple de réalisation de l'ensemble de cuisson conforme à l'invention.

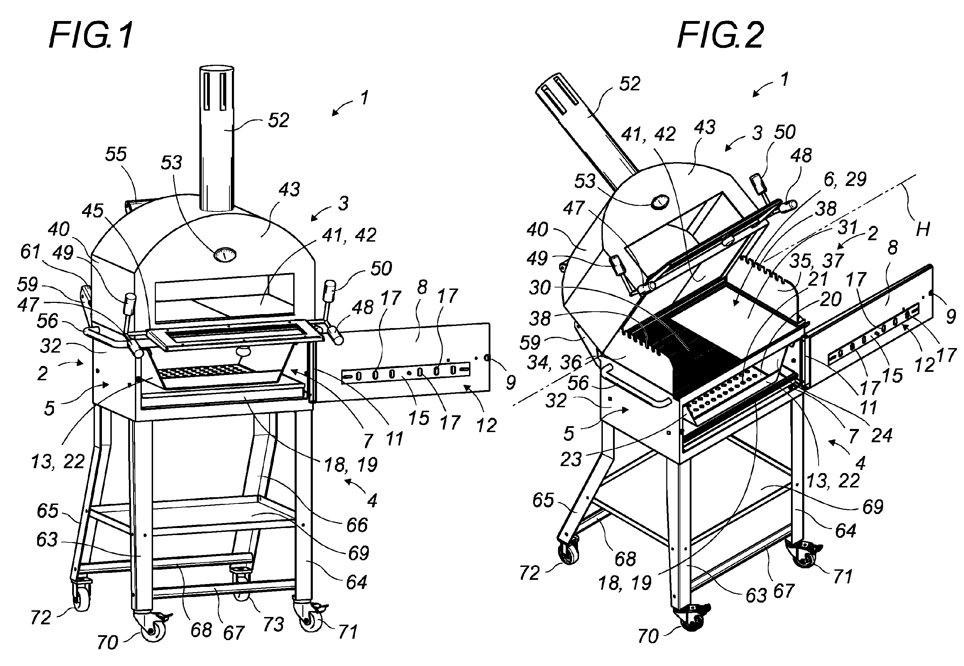

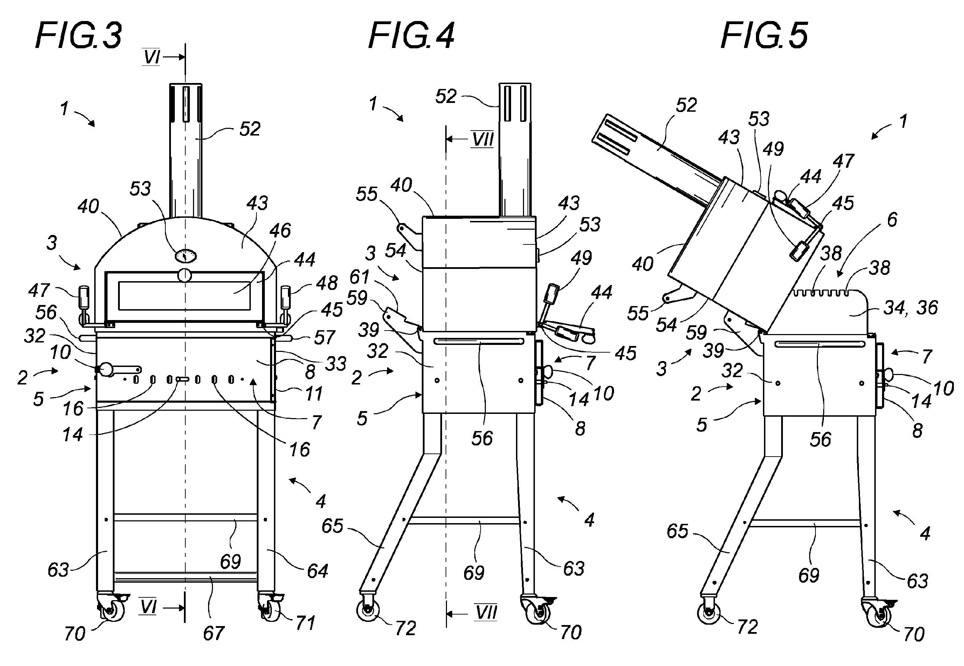

L'ensemble de cuisson d'extérieur multifonction selon la présente invention va maintenant être décrit de façon détaillée en référence aux figures 1 à 15.

Les éléments structurellement et fonctionnellement identiques sont affectés d'une même référence numérique ou alphanumérique, en passant d'une figure à l'autre.

Cet ensemble multifonction 1 se compose d'un barbecue 2 et d'un four 3, l'ensemble étant monté sur un châssis 4.

Le barbecue 2 de l'ensemble de cuisson multifonction 1 de l'invention comprend une enceinte 5 montée sur le châssis 4. Cette enceinte 5 est de préférence parallélépipédique et fabriquée en métal. Sa face supérieure 6 et sa face avant 7 sont ouvertes, une porte 8 étant montée sur la face avant 7 pour pouvoir la fermer. Cette porte 8 présente par exemple un système de fermeture 9 et une poignée 10, et est montée à pivotement par une articulation 11 fixée latéralement sur la face avant 7 de l'enceinte 5 du barbecue 2. Ladite porte 8 présente un registre de tirage 12 pour le foyer 13. Ce registre de tirage 12 comporte une saillie de préhension 14 solidarisée à une réglette coulissante 15 placée devant une série horizontale d'ouvertures 16 réalisées dans la porte 8. La réglette coulissante 15 présente aussi une série horizontale d'ouvertures 17 qui viennent se placer en face ou recouvrir partiellement ou totalement les ouvertures 16 de la porte 8 pour une admission réglable de l'air en vue du réglage du tirage du feu. En faisant coulisser latéralement la réglette coulissante 15 au moyen de la saillie de préhension 14, les ouvertures 16 réalisées dans la porte 8 peuvent être fermées ou ouvertes, totalement ou partiellement, selon l'effet de tirage désiré pour le foyer et la température souhaitée.

Dans sa partie inférieure, l'enceinte 5 du barbecue 2 comprend un cendrier 18, par exemple sous la forme d'un tiroir métallique monté coulissant 19 et qui peut être sorti par la face avant 7 de l'enceinte 5 du barbecue 2 pour le vider.

L'enceinte 5 du barbecue 2 comprend également un foyer 13 monté au-dessus du cendrier 18. Le fond 20 de ce foyer 13 présente des perforations 21 pour le passage des cendres. En ouvrant la porte 8 de façade du barbecue 2, il est possible d'accéder au foyer 13 pour l'alimenter en combustible, de préférence en bois ou en charbon de bois. Ce foyer 13 se présente sous la forme d'une plaque perforée 22 montée à l'intérieur de l'enceinte 5 du barbecue 2 par des flancs latéraux 23, 24 qui remontent de manière oblique pour être par exemple reçus à coulissement par leurs bords latéraux libres 25, 26 dans des glissières ou sur des supports horizontaux en saillie 27, 28 prévus latéralement à l'intérieur de l'enceinte 5 du barbecue 2.

Dans sa partie supérieure, au niveau de sa face ouverte 6, l'enceinte 5 du barbecue 2 comporte une surface de cuisson 29. Celle-ci est amovible pour son nettoyage ou son remplacement. Cette surface de cuisson 29 peut être composée d'une grille 30, d'une plaque 31 dite plancha ou des deux. Sur les dessins, donnés à titre d'exemple uniquement, le barbecue 2 de l'ensemble de cuisson multifonction 1 de l'invention comprend une surface de cuisson 29 composée d'une grille 30 dans sa partie gauche et d'une plancha 31 dans sa partie droite.

Ces grilles 30 et/ou plancha 31 sont préférentiellement amovibles et interchangeables afin que l'utilisateur puisse facilement configurer le barbecue 2 de l'invention selon ses besoins et ses goûts personnels. Ces éléments de surface de cuisson 29 peuvent être d'une seule pièce ou en plusieurs parties.

Le cendrier 18, le foyer 13 et les éléments de surface de cuisson 29 étant tous amovibles, il est très facile d'entretenir et de nettoyer le barbecue 2 de l'invention.

Les flancs latéraux 32, 33 de l'enceinte 5 du barbecue 2 peuvent être prolongés par des panneaux latéraux de support 34, 35 pour tourne broche. Il s'agit préférentiellement de plaques métalliques verticales 36, 37 présentant des encoches 38 réparties sur leur bord supérieur afin de pouvoir y loger une broche de cuisson (non représentée).

Le four 3 est monté sur le barbecue 2 par un moyen de liaison permettant de modifier sa position par rapport au barbecue 2 pour en libérer la surface de cuisson 29.

Le four 3, de l'ensemble de cuisson multifonction 1 de l'invention, est préférentiellement monté articulé sur le barbecue 2 de façon à pouvoir dégager la surface de cuisson 29 du barbecue 2 dans une position écartée.

Par exemple, le four 3 est monté pivotant sur le barbecue 2 au moyen d'une articulation de pivotement 39. Cette articulation de pivotement 39 peut être fixée sur le bord supérieur arrière de l'enceinte 5 du barbecue 2 pour que le four 3 pivote vers l'arrière.

Le four 3 comprend une enceinte 40 métallique dont le fond 41 est garni de pierres réfractaires 42 afin de servir de surface de cuisson pour des pizzas, des tarte-flambées, du pain ou tout autre aliment habituellement cuit dans un four de type four à pain ou à pizza. Ces pierres réfractaires 42 servent également d'inertie thermique.

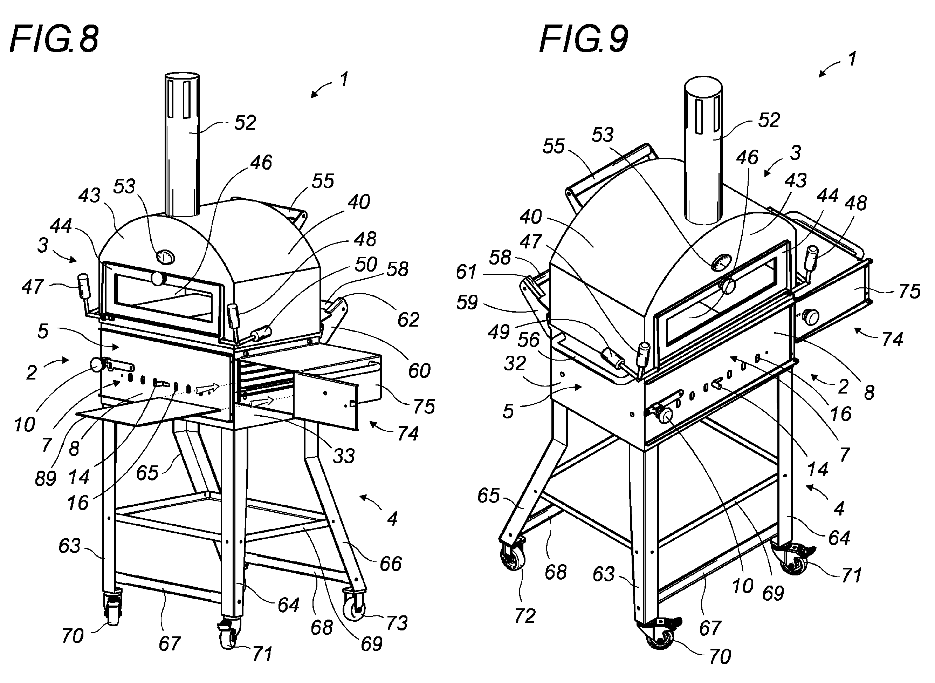

La face avant 43 de l'enceinte 40 du four 3 est fermée par une porte 44 montée basculante vers le bas en partie basse de l'enceinte 40 du four 3 au moyen d'une articulation de pivotement 45 de type charnière. Cette porte basculante 44 comporte une vitre 46 pour la vision à l'intérieur du four 3. Des poignées d'actionnement en ouverture et en fermeture 47, 48, comportant par exemple une partie de préhension en bois, sont fixées de chaque côté de la porte basculante 44, à proximité immédiate de l'articulation de pivotement 45. Ces poignées d'actionnement 47, 48 sont situées dans un plan parallèle à celui de la porte basculante 44 de l'enceinte 40 du four 3. Des contrepoids 49, 50 sont fixés perpendiculairement à la base de chacune de ces poignées d'actionnement 47, 48. En position fermée de la porte basculante 44, ces contrepoids 49, 50 sont sensiblement horizontaux et situés vers l'arrière (voir figures 8 et 9), tandis qu'ils se trouvent sensiblement verticaux et situés vers le haut lorsque la porte basculante 44 est basculée vers l'avant en position ouverte (voir figure 1). Lorsque la porte basculante 44 est basculée vers le haut en position fermée, le poids des contrepoids 49, 50 exerce une force de rappel vers l'arrière pour la porte basculante 44, ce qui plaque la porte basculante 44 en position fermée contre l'ouverture du four.

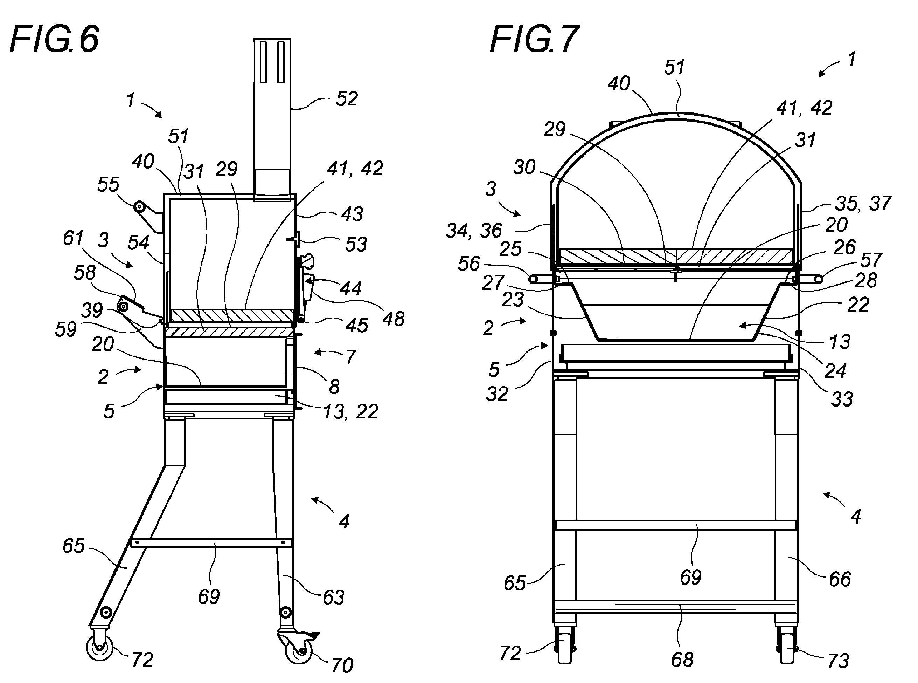

Comme cela peut être vu sur les figures 6 et 7, l'enceinte 40 métallique du four 3 présente une double paroi 51, hormis au niveau de sa face avant 43 et de son fond 41. Cette double paroi 51 est raccordée à une cheminée 52 montée sur la partie supérieure du four 3 et en communication avec le foyer 13 du barbecue 2. Ladite double paroi 51 est ainsi prévue pour que la sortie des fumées provenant du foyer 13 les fasse passer dans la double paroi 51 avant qu'elles soient évacuées par la cheminée 52. Cette circulation des fumées permet de chauffer l'enceinte 40 du four 3 sans traverser son volume intérieur.

Cette double paroi 51 est ouverte dans sa partie inférieure tandis que l'enceinte 40 du four 3 présente une largeur et une longueur sensiblement identiques à celles du barbecue 2, et l'enceinte 40 du four 3 est montée centrée sur celle du barbecue 2, ainsi les panneaux latéraux de support 34, 35 pour tourne broche du barbecue 2 sont reçus dans les parties latérales de la double paroi 51 lorsque le four 3 est basculé au-dessus du barbecue 2.

La cheminée 52 est décentrée vers l'avant pour qu'en position basculée du four 3 vers l'arrière, l'entrée de cette cheminée 52 se retrouve sensiblement au dessus du barbecue 2 et au milieu de celui-ci afin de guider les fumées issues du foyer 13. Ainsi, même basculé en arrière, le four 3 est utile au fonctionnement du barbecue 2.

Sur sa face avant 43, le four 3 peut comporter un thermomètre 53 qui affiche la température à l'intérieur du four 3.

Sur sa face arrière 54, le four 3 présente une poignée arrière 55 qui permet notamment de le basculer en arrière et de déplacer l'ensemble.

De même, sur ses faces latérales, l'ensemble de cuisson d'extérieur 1 de l'invention peut comporter des poignées latérales 56, 57 qui permettent de le déplacer et/ou d'y suspendre des ustensiles de cuisine.

Sur sa face arrière, le barbecue 2 peut comporter une barre horizontale 58 permettant notamment de déplacer l'ensemble de cuisson d'extérieur multifonction 1, les montants 59, 60 de cette barre horizontale 58 étant horizontaux ou obliques et servant également de dispositif de butée pour le four 3 en position basculée. Dans ce but, les montants 59, 60 de ladite barre horizontale 58 comportent des patins d'appui 61, 62, par exemple inclinés à 60° en arrière par rapport à l'horizontale, ces patins d'appui 61, 62 étant prévus pour servir d'appui pour la face arrière 54 du four 3 lorsque celui-ci est basculé en arrière, par exemple de 60° par rapport à l'horizontale. Cet angle d'inclinaison d'environ 60°, de préférence compris entre 50° et 70°, est préféré en ce qu'il permet de dégager l'espace permettant d'utiliser le barbecue 2, tout en ne déplaçant pas trop le centre de gravité de l'ensemble de cuisson d'extérieur multifonction 1, ce qui pourrait résulter en un équilibre précaire et en un risque de renversement de l'ensemble de cuisson 1. Bien entendu, il est évident pour l'homme du métier d'adapter l'ensemble de cuisson d'extérieur multifonction 1 pour permettre d'autres angles d'inclinaison.

Le châssis 4 de l'ensemble de cuisson d'extérieur multifonction 1 selon la présente invention se compose de quatre pieds verticaux 63, 64, 65, 66 pouvant être reliés entre eux par des tubes transversaux de renfort 67, 68. Un plateau de rangement 69 peut être monté entre ces pieds 63, 64, 65, 66. Les pieds arrière 65, 66 sont préférentiellement inclinés vers l'arrière afin d'offrir une bonne stabilité à l'ensemble de cuisson d'extérieur 1 de l'invention lorsque le four 3 est basculé en arrière.

Les quatre pieds verticaux 63, 64, 65, 66 sont fixés au foyer 13 par leur extrémité supérieure tandis que leurs extrémités inférieures sont pourvues de roulettes 70, 71, 72, 73 pour le déplacement de l'ensemble de cuisson multifonction 1 de l'invention. Les roulettes avant 70, 71 sont préférentiellement orientables et sont pourvues d'un frein permettant de bloquer leur rotation pour immobiliser l'ensemble de cuisson multifonction 1.

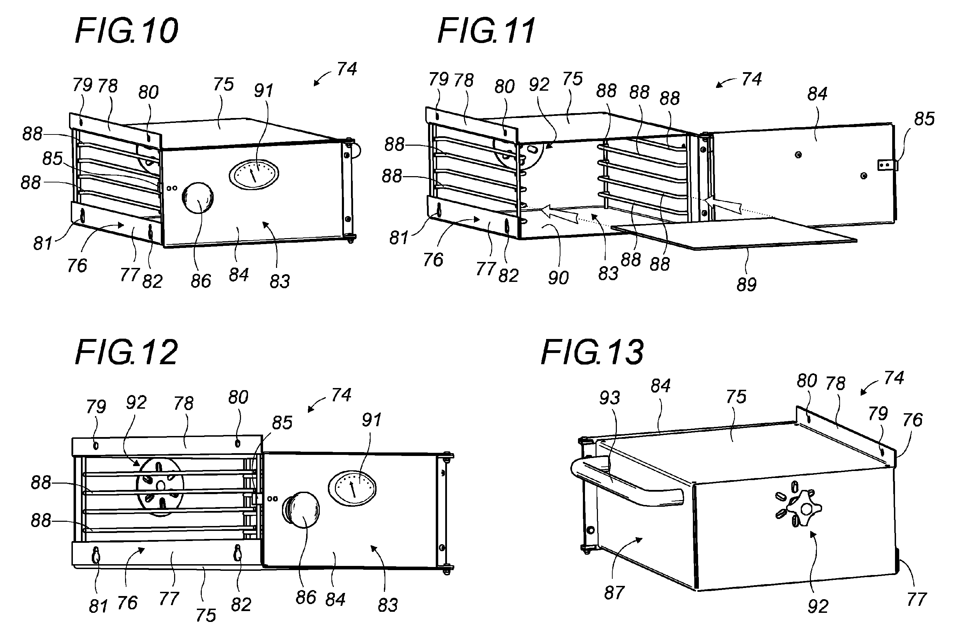

L'ensemble de cuisson d'extérieur multifonction 1 selon la présente invention peut comporter au moins un caisson de maintien en température 74. Ce caisson de maintien en température 74 comprend une enceinte métallique 75 à monter ou à fixer par l'un de ses flancs 76 sur un côté chaud, par exemple contre un ou les deux flancs du barbecue 2. Le flanc de fixation 76 du caisson 74 prévu pour être monté sur un côté chaud peut être ouvert ou fermé, totalement ou partiellement. Sur les figures 10 à 13 il est représenté partiellement ouvert, avec des rebords horizontaux 77, 78 pourvus d'orifices 79, 80, 81, 82 pour sa fixation, par exemple contre le flanc du barbecue 2.

Puisque le caisson de maintien en température 74 de l'invention peut être monté sur n'importe quel côté chaud d'un ensemble de cuisson d'extérieur 1, son flanc de fixation 76 peut présenter une forme quelconque et toute configuration qui soient adaptées à son montage. Ainsi, à titre d'exemple, si le caisson de maintien en température 74 de l'invention doit être monté sur un flanc bombé d'un ensemble de cuisson d'extérieur 1, le flanc de fixation 76 par lequel il est monté sur cet ensemble 1 doit par conséquent présenter une forme concave correspondante.

Une face du caisson de maintien en température 74, de préférence sa face avant 83, comporte une porte 84 permettant l'accès à l'intérieur de l'enceinte métallique 75. Cette porte présente un système de fermeture 85 et une poignée 86.

Les flancs verticaux 76, 87 du caisson situés de chaque côté de cette porte 84 peuvent comporter des supports horizontaux 88 pour des plateaux horizontaux 89 prévus pour y entreposer des pizzas, tartes flambées ou autres en vue de les maintenir en température. Les plateaux horizontaux 89 sont placés de manière amovible sur ces supports horizontaux 88, ce qui permet notamment de les retirer pour leur nettoyage.

On peut également envisager que des plateaux horizontaux 89 similaires soient fixés à l'intérieur du caisson de maintien en température 74 ou simplement de cornières supportant des plateaux amovibles.

Bien que sur les figures 8 et 11, un seul plateau horizontal 89 est représenté, le caisson de maintien en température 74, selon sa taille, peut bien entendu en comporter un plus grand nombre. A titre d'exemple, le caisson de maintien en température 74 représenté sur les figures peut ainsi comporter un maximum de cinq plateaux horizontaux 89, le fond 90 du caisson 74 pouvant également faire office de plateau horizontal supplémentaire.

Le caisson de maintien en température 74 peut comporter un thermomètre 91 qui affiche la température à l'intérieur de celui-ci. Ce thermomètre 91 est préférentiellement situé en face 83 avant du caisson de maintien en température 74, par exemple sur la porte 84 de celui-ci.

Le caisson de maintien en température 74 peut également comporter un échappement d'air 92 prévu pour être actionné en ouverture par l'utilisateur lorsque la température à l'intérieur du caisson 74 est trop élevée afin de laisser échapper l'air chaud contenu dans celui-ci. Le système d'échappement d'air 92 représenté sur la figure 13 n'est donné qu'à titre d'exemple et l'homme du métier peut utiliser n'importe quel autre système prévu pour laisser s'échapper tout ou partie de l'air chaud contenu dans le caisson de maintien en température 74.

Enfin, sur une de ses faces, de préférence sur son flanc latéral libre 87, le caisson de maintien en température 74 peut comporter une poignée 93 qui permet de déplacer l'ensemble de cuisson d'extérieur multifonction 1 et/ou d'y suspendre des ustensiles de cuisine.

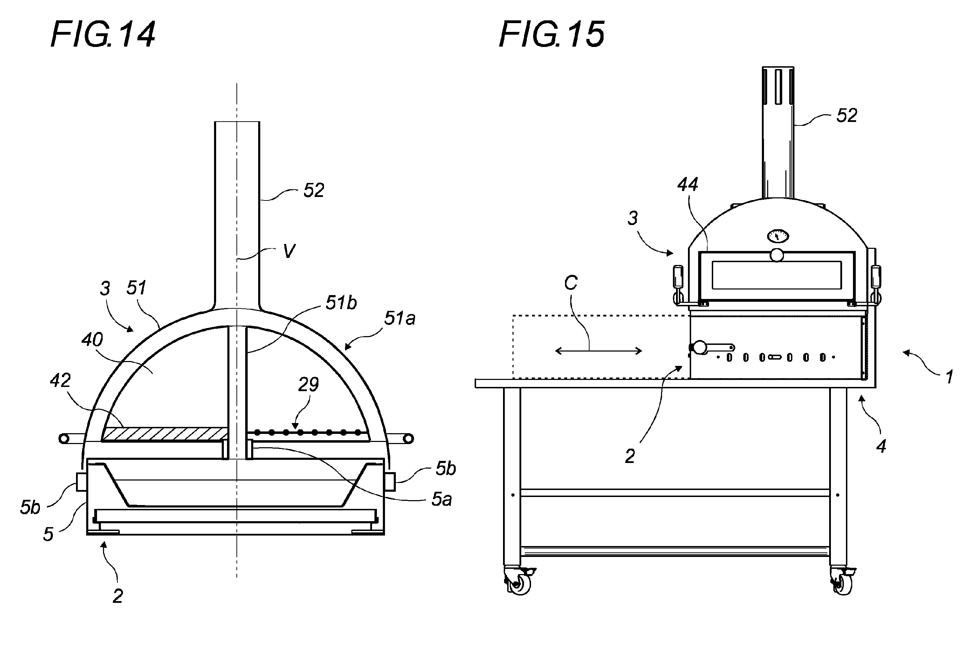

Dans l'exemple de réalisation de l'ensemble conforme à l'invention et représenté à la figure 14, le four 3 est monté sur le barbecue 2 par l'intermédiaire d'organes de liaison permettant de pivoter ledit four 3 autour d'un axe de pivotement sensiblement vertical V. La double paroi 51 comprend avantageusement une portion de paroi double 51 b séparant l'enceinte métallique 40 de la surface de cuisson 29. Cette dernière est accessible par exemple grâce à une ouverture ménagée dans une autre portion de paroi double 51 a surplombant ladite surface de cuisson 29. A titre d'exemple, la portion de double paroi 51 b permet également d'évacuer une partie des fumées issues du foyer 13 et contribue par conséquent à l'échauffement de l'enceinte métallique 40.

Dans l'exemple de réalisation de la figure 14, les organes de liaison comprennent un arbre de rotation central 5a et des roulements périphériques 5b sur lesquels repose l'extrémité de la paroi externe de la double paroi 51. Lorsque le foyer 13 s'étend par exemple uniquement dans une moitié avant de l'enceinte 5 faisant face à l'utilisateur, ce dernier pivote alors la double paroi 51 entraînant en rotation le four 3 et la surface de cuisson 29 pour utiliser l'un ou l'autre de ces moyens de cuisson. A titre de variante, lorsque le foyer 13 s'étend sensiblement dans toute l'enceinte 5, il est possible d'utiliser simultanément les deux moyens de cuisson. En effet, l'utilisateur pivote la double paroi 51 pour disposer en face de lui soit le four 3, soit la surface de cuisson 29. Il peut ainsi vérifier le degré de cuisson par exemple de pizzas dans l'enceinte métallique 40 et d'articles reposant sur la surface de cuisson 29 tout en poursuivant les opérations de cuisson. L'ensemble de cuisson conforme à l'invention présente donc un encombrement minimal remarquable tout en permettant d'effectuer simultanément des cuissons de nature différente.

Dans l'exemple de réalisation de l'ensemble conforme à l'invention et représenté à la figure 15, le four 3 est monté sur le barbecue 2 par l'intermédiaire d'organes de coulissement permettant au four 3 de coulisser selon la direction C, de la position fonctionnelle de cuisson vers la position libérant la surface de cuisson 29 et inversement. La position libérant la surface de cuisson 29 est représentée en pointillés sur la figure 15. Le four 3 est avantageusement fixé au châssis 4 et reste en position lorsque le barbecue 2 coulisse dans sa position fonctionnelle dans laquelle l'utilisateur accède librement à la surface de cuisson 29.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention.

Par exemple, bien que sur les dessins le foyer 13 de l'ensemble de cuisson d'extérieur multifonction 1 est représenté sous la forme d'un foyer 13 à combustible solide, par exemple à bois ou à charbon de bois, il est parfaitement possible d'adapter l'ensemble de cuisson de l'invention à un foyer 13 fonctionnant au gaz ou avec n'importe quel autre combustible gazeux, liquide ou solide.

De même sur les dessins, nous avons représenté un ensemble de cuisson d'extérieur multifonction 1 permettant de cuire simultanément deux pizzas, et comportant à la fois une grille 30 et une plancha 31, mais il est possible de prévoir un ensemble de cuisson 1 moins large ou plus large, qui comporte par exemple une ou plusieurs grilles 30, une ou plusieurs plancha 31, ou une combinaison quelconque de plusieurs de ces éléments de cuisson 30, 31.

## Revendications

1. Ensemble de cuisson d'extérieur multifonction (1) se composant d'un barbecue (2) et d'un four (3), l'ensemble étant monté sur un châssis (4) et comprenant :
• le barbecue (2) comprenant une enceinte (5) montée sur le châssis (4), une face supérieure (6) de cette enceinte (5) et une face avant (7) de cette enceinte (5) étant ouvertes, une porte (8) étant montée sur la face avant (7) pour pouvoir la fermer, l'enceinte (5) du barbecue (2) comprenant :
- un cendrier (18) dans sa partie inférieure ;
- un foyer (13) monté au-dessus du cendrier (18) ;
- une surface de cuisson (29) réalisée au niveau de la face supérieure (6) ouverte de ladite enceinte (5);
• le four (3) comprenant une enceinte métallique (40) dont le fond (41) est garni de pierres réfractaires (42) afin de servir de surface de cuisson et d'inertie thermique, et une cheminée (52) montée sur la partie supérieure du four (3), l'enceinte métallique (40) comprenant :
• une face avant (43) fermée par une porte (44),
**caractérisé en ce que** le four (3) est monté mobile sur le barbecue (2) par l'intermédiaire d'un moyen de liaison permettant de modifier sa position par rapport au barbecue (2) en déplaçant ledit four (3) entre une position fonctionnelle de cuisson au-dessus du barbecue et une position libérant l'accès à la surface de cuisson (29) du barbecue (2).

2. Ensemble de cuisson d'extérieur multifonction (1) selon la revendication 1, **caractérisé en ce que** le four (3) est monté mobile sur le barbecue (2) grâce à une articulation de pivotement (39).

3. Ensemble de cuisson d'extérieur multifonction (1) selon la revendication 2, **caractérisé en ce que** le four (3) est monté pivotant vers l'arrière grâce à l'articulation de pivotement (39), laquelle présente un axe de pivotement sensiblement horizontal (H).

4. Ensemble de cuisson d'extérieur multifonction (1) selon la revendication 3, **caractérisé en ce que** l'articulation de pivotement (39) est fixée sur le bord supérieur arrière de l'enceinte (5) du barbecue (2).

5. Ensemble de cuisson d'extérieur multifonction (1) selon la revendication 2, **caractérisé en ce que** le four (3) est monté sur le barbecue (2) par l'intermédiaire d'organes de liaison permettant de pivoter ledit four (3) autour d'un axe de pivotement sensiblement vertical (V).

6. Ensemble de cuisson d'extérieur multifonction (1) selon la revendication 1, **caractérisé en ce que** le four (3) est monté sur le barbecue (2) par l'intermédiaire d'organes de coulissement permettant au four (3) de coulisser de la position fonctionnelle de cuisson vers la position libérant la surface de cuisson (29) et inversement.

7. Ensemble de cuisson d'extérieur multifonction (1), selon la revendication 1, **caractérisé en ce que** l'enceinte (40) du four (3) présente une double paroi (51), hormis au niveau de sa face avant (43) et de son fond (41), la double paroi (51) étant d'une part ouverte dans sa partie inférieure et d'autre part raccordée à la cheminée (52) et en communication avec le foyer (13) du barbecue (2).

8. Ensemble de cuisson d'extérieur multifonction (1) selon la revendication 1, **caractérisé en ce que** l'enceinte (5) du barbecue (2) présente des flancs latéraux (32, 33), prolongés par des panneaux latéraux de support (34, 35) pour tourne broche.

9. Ensemble de cuisson d'extérieur multifonction (1) selon la revendication 1, **caractérisé en ce que** la cheminée (52) est décentrée vers l'avant.

10. Ensemble de cuisson d'extérieur multifonction (1) selon la revendication 1, **caractérisé en ce que** le barbecue (2) comporte une barre horizontale (58) sur sa face arrière, les montants (59, 60) de cette barre horizontale (58) étant horizontaux ou obliques et servant également de dispositif de butée pour le four (3) en position basculée.

11. Ensemble de cuisson d'extérieur multifonction (1) selon la revendication 3, **caractérisé en ce que** le four (3) peut être basculé en arrière par l'articulation de pivotement (39) selon un angle d'inclinaison compris de préférence entre 50° et 70°.

12. Ensemble de cuisson d'extérieur multifonction (1) selon la revendication 1, **caractérisé en ce qu'**il comporte au moins un caisson de maintien en température (74).

13. Ensemble de cuisson d'extérieur multifonction (1) selon la revendication 12, **caractérisé en ce que** le caisson de maintien en température (74) comprend une enceinte métallique (75) à monter ou à fixer par l'un de ses flancs (76) sur un côté chaud du barbecue (2) et une porte (84) permettant l'accès à l'intérieur de l'enceinte métallique (75).

14. Ensemble de cuisson d'extérieur multifonction (1) selon la revendication 13, **caractérisé en ce que** les flancs verticaux (76, 87) du caisson (74) situés de chaque côté de la porte (84) comportent des supports horizontaux (88) pour des plateaux horizontaux (89) prévus pour y entreposer des pizzas, tartes flambées ou autres.

15. Ensemble de cuisson d'extérieur multifonction (1) selon la revendication 12, **caractérisé en ce que** le caisson de maintien en température (74) comporte un thermomètre (91) qui affiche la température à l'intérieur de celui-ci et un échappement d'air (92) prévu pour être actionné en ouverture par l'utilisateur afin de laisser échapper l'air chaud contenu dans le caisson (74).

## Patentansprüche

1. Mehrzweck-Kocheinheit für den Außenbereich (1), bestehend aus einem Grill (2) und einem Backofen (3), wobei die Einheit auf einen Rahmen (4) montiert ist, welcher folgendes umfasst:
• den Grill (2), umfassend einen Behälter (5), der auf den Rahmen (4) montiert ist, wobei eine Oberseite (6) dieses Behälters (5), sowie eine Vorderseite (7) dieses Behälters (5) offen sind, eine Tür (8) a der Vorderseite (7) montiert ist, um diese schließen zu können und wo der Behälter (5) des Grills (2) folgende umfasst:
- einen Asche-Auffang (18) in seinem unteren Bereich;
- einen Feuerraum (13), über dem Asche-Auffang (18) angebracht;
- eine Kochfläche (29), die auf Ebene der offenen Oberseite (6) des besagten Behälters (5) angeordnet ist;
• den Ofen (3), welcher einen metallischen Behälter (40) aufweist, dessen Boden (41) mit Feuerfeststeinen (42) ausgelegt ist, um als Kochoberfläche und zur Wärmeträgheit beizutragen, sowie einen Kamin (52), der am oberen Teil des Ofens (3) angeordnet ist, und wo der metallische Behälter (40) folgendes umfasst:
• eine Vorderseite (43), die mit einer Tür (44) verschlossen wird,
**dadurch gekennzeichnet, dass** der Ofen (3) mit Hilfe eines Verbindungsmittels mobil auf dem Grill (2) montiert ist, welches ermöglicht, seine Position in Bezug auf den Grill (2) zu ändern, indem der besagte Ofen (3) Back-Betriebsposition über dem Grill und einer Position, die den Zugang zur Kochfläche (29) des Grills (2) freigibt, bewegt wird.

2. Mehrzweck-Kocheinheit für den Außenbereich (1) gemäß Anspruch 1, **dadurch gekennzeichnet, dass** der Ofen (3) Dank eines Schwenkgelenks (39) mobil auf dem Grill (2) montiert ist.

3. Mehrzweck-Kocheinheit für den Außenbereich (1) gemäß Anspruch 2, **dadurch gekennzeichnet, dass** der Ofen (3) Dank des Schwenkgelenks (39) nach hinten schwenkbar montiert ist, wobei das Gelenk eine im Wesentlichen horizontale Schwenkachse (H) aufweist.

4. Mehrzweck-Kocheinheit für den Außenbereich (1) gemäß Anspruch 3, **dadurch gekennzeichnet, dass** das Schwenkgelenk (39) an der oberen hinteren Kante des Behälters (5) des Grills (2) befestigt ist.

5. Mehrzweck-Kocheinheit für den Außenbereich (1) gemäß Anspruch 2, **dadurch gekennzeichnet, dass** der Ofen (3) mit Hilfe von Verbindungsorganen auf dem Grill (2) montiert ist, die es ermöglichen, den besagten Ofen (3) um eine im Wesentlichen vertikale Schwenkachse (V) zu schwenken.

6. Mehrzweck-Kocheinheit für den Außenbereich (1) gemäß Anspruch 1, **dadurch gekennzeichnet, dass** der Ofen (3) mit Hilfe von Gleitorganen auf dem Grill (2) montiert ist, die es ermöglichen, den besagten Ofen (3) von der Back-Betriebsposition in die Position zu gleiten, welche die Kochfläche (29) freigibt und umgekehrt.

7. Mehrzweck-Kocheinheit für den Außenbereich (1) gemäß Anspruch 1, **dadurch gekennzeichnet, dass** der Behälter (40) des Ofens (3) eine doppelte Wand (51) aufweist, außer für seine Vorderseite (43) und seinen Boden (41), wobei die doppelte Wand (51) einerseits in ihrem unteren Bereich geöffnet ist und andererseits an den Kamin (52) angeschlossen ist und mit dem Feuerraum (13) des Grills (2) kommuniziert.

8. Mehrzweck-Kocheinheit für den Außenbereich (1) gemäß Anspruch 1, **dadurch gekennzeichnet, dass** der Behälter (5) des Grills (2) Seitenflanken (32, 33) aufweist, die durch seitliche Trägerauflagen (34, 35) für einen Drehgrill verlängert werden.

9. Mehrzweck-Kocheinheit für den Außenbereich (1) gemäß Anspruch 1, **dadurch gekennzeichnet, dass** der Kamin (52) nach vorne versetzt ist.

10. Mehrzweck-Kocheinheit für den Außenbereich (1) gemäß Anspruch 1, **dadurch gekennzeichnet, dass** der Grill (2) eine horizontale Stange (58) an seiner Hinterseite umfasst, wobei die Streben (59, 60) dieser horizontalen Stange (58) horizontal oder schräg verlaufen und ebenfalls als Anschlagvorrichtung für den Ofen (3) in ausgeschwenkter Position zu dienen.

11. Mehrzweck-Kocheinheit für den Außenbereich (1) gemäß Anspruch 3, **dadurch gekennzeichnet, dass** der Ofen (3) über das Schwenkgelenk (39) gemäß einem Neigungswinkel von vorzugsweise 50° bis 70° nach hinten geschwenkt werden kann.

12. Mehrzweck-Kocheinheit für den Außenbereich (1) gemäß Anspruch 1, **dadurch gekennzeichnet, dass** sie über mindestens einen Warmhalte-Kasten (74) verfügt.

13. Mehrzweck-Kocheinheit für den Außenbereich (1) gemäß Anspruch 12, **dadurch gekennzeichnet, dass** der Warmhalte-Kasten (74) einen metallischen Behälter (75) umfasst, der über eine seiner Flanken (76) an einer heißen Seite des Grills (2) montiert oder befestigt ist, sowie eine Tür (84), die den Zugang zum Innenraum des metallischen Behälters (75) freigibt.

14. Mehrzweck-Kocheinheit für den Außenbereich (1) gemäß Anspruch 13, **dadurch gekennzeichnet, dass** die vertikalen Flanken (76, 87) des auf jeder Seite der Tür (84) befindlichen Behälters (74) horizontale Auflagen (88) für horizontale Tabletts (89) umfasst, die vorgesehen sind, um dort Pizzen, Flammeküchle oder andere Speisen zwischenzeitlich abzustellen.

15. Mehrzweck-Kocheinheit für den Außenbereich (1) gemäß Anspruch 12, **dadurch gekennzeichnet, dass** der Warmhalte-Kasten (74) ein Thermometer (91) umfasst, welches die Innentemperatur anzeigt, sowie eine Lüftung (92), die vom Nutzer aktiviert, bzw. geöffnet werden kann, um die im Kasten (74) befindliche Heißluft abzulassen.

## Claims

1. Outdoor multifunction cooking set (1) composed of a barbecue (2) and an oven (3), with the assembly being mounted on a frame (4) and including:
• the barbecue (2), incorporating a chamber (5) mounted on the frame (4), an upper face (6) of this chamber (5) and a front face (7) of this chamber (5) being open, with one door (8) being mounted on the front face (7), in order to be able to close it, with the chamber (5) of the barbecue (2) including:
- an ashpit (18) at the bottom,
- a hearth (13) mounted above the ashpit (18),
- a cooking surface (29) implemented on the open upper face (6) of the said chamber (5),
• the oven (3), including a metal chamber (40) of which the bottom (41) is fitted with refractory stones (42) in order to serve as a cooking surface and thermal inertia system, and a chimney (52) mounted on the upper part of the oven (3), with the metal chamber (40) including:
• a front face (43) with a door (44) to close it,
**characterized in that** the oven (3) is mounted mobile on the barbecue (2), by means of a connection system allowing one to modify its position in relation to the barbecue (2), by moving the said oven (3) between a working cooking position above the barbecue, and a position freeing-up access to the cooking surface (29) of the barbecue (2).

2. Outdoor multifunction cooking set (1) according to claim 1, **characterized in that** the oven (3) is mounted mobile on the barbecue (2) by virtue of a pivot articulation (39).

3. Outdoor multifunction cooking set (1) according to claim 2, **characterized in that** the oven (3) is mounted pivoting rearwards by means of the pivot articulation (39), which has an essentially horizontal pivot axis (H).

4. Outdoor multifunction cooking set (1) according to claim 3, **characterized in that** the pivot articulation (39) is fixed on the rear upper edge of the chamber (5) of the barbecue (2).

5. Outdoor multifunction cooking set (1) according to claim 2, **characterized in that** the oven (3) is mounted on the barbecue (2) by means of connection components allowing one to pivot the said oven (3) around an essentially vertical pivot axis (V).

6. Outdoor multifunction cooking set (1) according to claim 1, **characterized in that** the oven (3) is mounted on the barbecue (2) by means of sliding components allowing the oven (3) to slide from the working cooking position to the position freeing-up the cooking surface (29), and vice versa.

7. Outdoor multifunction cooking set (1) according to claim 1 **characterized in that** the chamber (40) of the oven (3) has a double wall (51), except at its front face (43) and its bottom (41), with the double wall (51) being, firstly, open at the bottom and, secondly, connected to the chimney (52) and in communication with the hearth (13) of the barbecue (2).

8. Outdoor multifunction cooking set (1) according to claim 1, **characterized in that** the chamber (5) of the barbecue (2) has sides (32, 33), extended by supporting side panels (34, 35) for a rotary spit.

9. Outdoor multifunction cooking set (1) according to claim 1, **characterized in that** the chimney (52) is positioned off-center towards the front.

10. Outdoor multifunction cooking set (1) according to claim 1, **characterized in that** the barbecue (2) incorporates a horizontal bar (58) on its rear face, with the uprights (59, 60) of this horizontal bar (58) being horizontal or oblique and also acting as a travel limiter system for the oven (3) in the tipped position.

11. Outdoor multifunction cooking set (1) according to claim 3, **characterized in that** the oven (3) can be tipped rearwards by the pivot articulation (39), to an inclination angle preferably comprised between 50° and 70°.

12. Outdoor multifunction cooking set (1) according to claim 1, **characterized in that** it incorporates at least one temperature maintenance chamber (74).

13. Outdoor multifunction cooking set (1) according to claim 12, **characterized in that** the temperature maintenance chamber (74) includes a metal chamber (75) to be mounted or to be fixed by one of its sides (76) on one hot side of the barbecue (2) and a door (84) providing access to the interior of the metal chamber (75).

14. Outdoor multifunction cooking set (1) according to claim 13, **characterized in that** the vertical sides (76, 87) of the chamber (74) located each side of the door (84) incorporate horizontal supports (88) for horizontal trays (89) designed to hold pizzas, tartes flambées or other foodstuffs.

15. Outdoor multifunction cooking set (1) according to claim 12, **characterized in that** the temperature maintenance chamber (74) incorporates a thermometer (91) that displays the temperature inside it, and an air outlet (92) designed to be opened by the user so as to allow the hot air contained in the chamber (74) to escape.
